# EUROPEAN PATENT APPLICATION

(11) **EP 1 894 657 A2**
(43) Date of publication of application: **05.03.2008**
(21) Application number: 07114363.0
(22) Date of filing: 15.08.2007
(51) Int. Cl.: B23H 7/10, B23H 7/00

(54) **Wire electrode supply device for wire-cut electric discharge machine**

(30) Priority: 30.08.2006 JP 2006234031
(71) Applicant: Fanuc Ltd, Minamitsuru-gun, Yamanashi 401-0597 (JP)
(72) Inventor: Kita, Yuki,Room 10-203,, Minamitsuru-gun, Yamanashi 401-0511 (JP); Takayama, Yushi, Room F202,, Tsukuba-shi, Ibaraki 300-2641 (JP); Makino, Yoshinori, Room 11-307, Minamitsuru-gun, Yamanashi 401-0511 (JP)
(74) Representative: Billington, Lawrence Emlyn

(57) **Abstract**

A wire electrode supply device for a wire-cut electric discharge machine that prevents a wire electrode from departing from a wire traveling path using a simple configuration. A wire bobbin (2) is driven in a reverse direction of a wire feed direction by a torque motor (3) to apply tension to the wire electrode. A velocity detector (4) that detects a rotation velocity of the wire bobbin (2) is provided. The wire electrode is laid along the wire traveling path that includes a guide roller (14), a brake roller (5), upper and lower guides (8,9), and a wire take-up roller (10a,10b), during which, when the wire electrode is fed out from the wire bobbin, if a velocity detected by the velocity detector meets or exceeds a predetermined velocity, the output torque of the torque motor (3) is increased so that inertial force of the wire bobbin causes the wire electrode to slacken, thus preventing the wire electrode from departing from the wire traveling path. Accordingly, the wire electrode can be simply prevented from departing from the wire traveling path merely by providing a velocity detector, and since the wire electrode does not come out of the wire traveling path the work of laying the wire is made easy.

## Description

### BACKGROUND OF THE INVENTION

### 1. Field of the Invention

The present invention relates to a wire electrode supply device for a wire-cut electric discharge machine.

### 2. Description of the Related Art

A wire electrode supply device for a wire-cut electric discharge machine is composed of a wire bobbin that supplies the wire electrode, brake means, wire take-up means, and so forth. The wire electrode supplied from the wire bobbin is braked by a brake roller of the brake means and passed through a work area where a workpiece is processed, after which the wire electrode is taken up by a take-up roller or other such wire take-up means so that the wire electrode travels while tension is imparted to it. The wire-cut electric discharge machine then applies a voltage between the wire electrode and the workpiece so as to create a discharge and carry out processing.

In the case of a heavy wire electrode the wire bobbin of the wire electrode supply device also becomes heavy, and therefore a DC motor whose velocity can be controlled is used as a motor that drives the wire bobbin. By controlling a velocity of rotation of the wire bobbin, tension on the wire electrode can be kept constant. For example, when the wire electrode feed velocity is changed from a given high velocity (hereinafter simply "fast") to a given low velocity (hereinafter simply "slow"), the heavy wire bobbin, which is rotating at high velocity, does not immediately switch to the slow rotation velocity due to inertial force. As a result, the wire electrode slackens and the tension changes, with the possibility that the wire electrode comes out of a predetermined wire traveling path. To prevent this, the DC motor is instructed to revolve in a direction that rewinds the wire so as to take up slack in the wire.

By contrast, when the wire electrode feed velocity is changed from slow to fast, the large inertial force of the heavy wire bobbin does not track the change in the velocity of rotation but lags it instead, and there is a possibility that an excessive load is placed on the wire electrode due to the difference between the take-up velocity of the wire take-up means and the supply velocity from the wire bobbin and the wire electrode breaks. In order to prevent this, the DC motor is instructed to rotate in a direction that feeds the wire forward, thus increasing the velocity of rotation of the wire bobbin and preventing the tension on the wire from becoming excessive.

To achieve such control, a tension application device that applies tension to the wire electrode is provided, and the state of the tension application device is detected and the velocity of the motor that drives the wire bobbin is controlled so that the tension supplied by the tension application device is kept constant.

For example, as a method of maintaining a constant wire tension, providing tension absorption rollers that displace with fluctuations in the tension of the wire where the wire is unwound from a wire supply reel and controlling the velocity of a variable velocity motor that drives the wire supply reel according to signals from a roller detector that detects the displacement of the tension absorption rollers so as to maintain the tension absorption rollers at predetermined positions is known (JP61-54420U).

In addition, supplying wire electrode from a wire bobbin through a pulley to the working part of the machine and controlling the velocity of the motor that drives the wire bobbin according to signals from a position detection unit that detects the position of the pulley is also widely known (JP06-335826A).

Moreover, since slack in the wire electrode is prevented and the wire electrode does not depart from the wire traveling path if the tension on the wire electrode is kept constant, a torque motor is sometimes used as the drive motor that rotates the wire bobbin. By applying a constant torque to the wire bobbin with the torque motor in a direction that is the reverse of the direction of rotation of the wire bobbin, a constant tension is applied to the wire electrode. For example, that which couples a pretension motor to a shaft of the wire bobbin and applies tension to the wire electrode is described in JP 2616110B. The invention described in JP 2616110B is one in which the wire electrode, which is fed out from the wire bobbin, passes through a brake roller, is guided by a plurality of pulleys and fed out by a feed roller. A rotation velocity of the brake roller is detected and braking power adjusted based on the difference between the brake roller rotation velocity and a wire feed velocity of the feed roller so as to control the tension on the wire electrode.

In addition, coupling a hysteresis motor that applies pretension to the wire bobbin in a configuration in which the wire electrode is fed out from the wire bobbin by a recovery roller via a brake pulley and a guide pulley, generating a tension fluctuation control signal based on the difference between a signal from a recovery roller velocity detector and a signal from a velocity detector mounted on the brake, and outputting the tension fluctuation control signal to a brake drive circuit and controlling the tension on the wire electrode is known (see JP02-185321A).

However, methods that control wire tension using methods that control the rotation velocity of a variable velocity motor such as a DC motor or the like require a detection device to detect slack in the wire electrode as well as means to detect the state of the detection device and control the velocity of the motor.

On the other hand, when using a torque motor as the drive motor that rotates the wire bobbin, although a constant tension is kept on the wire electrode by applying a constant torque to the wire bobbin with the torque motor, when replacing the wire bobbin and laying the wire electrode along the wire traveling path, it is necessary to lay the wire electrode along a wire traveling path that feeds the wire electrode out from the bobbin, through a brake roller, a plurality of guide rollers and an upper guide that guides the wire electrode, and further, through a workpiece processing start aperture, and leads the wire electrode to a lower guide, a guide roller, and a wire take-up roller. At this time, when the wire electrode is drawn from the wire bobbin in order to lay the wire electrode along the wire traveling path, if the velocity with which the wire electrode is drawn from the wire bobbin is great, the inertial force of the wire bobbin causes the wire bobbin to continue to spin, which may cause the wire electrode to come loose from the wire bobbin and depart from the wire traveling path along which it has been laid up to then. The problem of the wire electrode departing from the wire traveling path is especially acute when the velocity with which the wire electrode is fed out is fast or when the bobbin is heavy.

Typically, in order to prevent the wire electrode from departing from the wire traveling path, a constant tension is exerted in the wire electrode in the reverse feed direction, such that the greater the tension the harder it is for the wire electrode to depart from the wire traveling path. However, when the wire electrode is fed out, if the tension applied by the torque motor is too great, the force needed to fed out the wire electrode must also be increased.

### SUMMARY OF THE INVENTION

The present invention provides a wire electrode supply device for a wire-cut electric discharge machine in which the wire electrode does not come loose from a wire traveling path even when a feed velocity is fast.

A wire electrode supply device of the present invention supplies a wire electrode to a wire traveling path of a wire-cut electric discharge machine. The wire electrode supply device comprises: a wire bobbin storing the wire electrode; a torque motor for applying a torque to the wire bobbin in a direction reverse to a traveling direction of the wire electrode; a velocity detector for detecting a rotational velocity of the torque motor or the wire bobbin; and a controller that controls the torque motor to raise the torque applied to the wire bobbin from a first value to a second value greater than the first value when the rotational velocity detected by the velocity detector exceeds a predetermined value.

The controller may control the torque motor to lower the torque to the first value when a predetermined period of time elapses or when the rotation velocity detected by the velocity detector is reduced to be not greater than the predetermined value after controlling the torque motor to raise the torque to the second value.

The wire electrode supply device of the present invention enables the departure of the wire electrode from the wire traveling path to be prevented with a simple configuration that merely adds a velocity detector to detect the velocity of either the torque motor that drives the wire bobbin or to the wire bobbin. In addition, since the wire electrode does not depart from the wire traveling path, the work of laying the wire is made easier.

### BRIEF DESCRIPTION OF THE DRAWINGS

FIG. 1 is a schematic diagram showing an embodiment of the present invention; and
FIG. 2 is a timing chart showing timing and duration of an increase in output torque from a torque motor of the embodiment as shown in FIG. 1.

### DETAILED DESCRIPTION

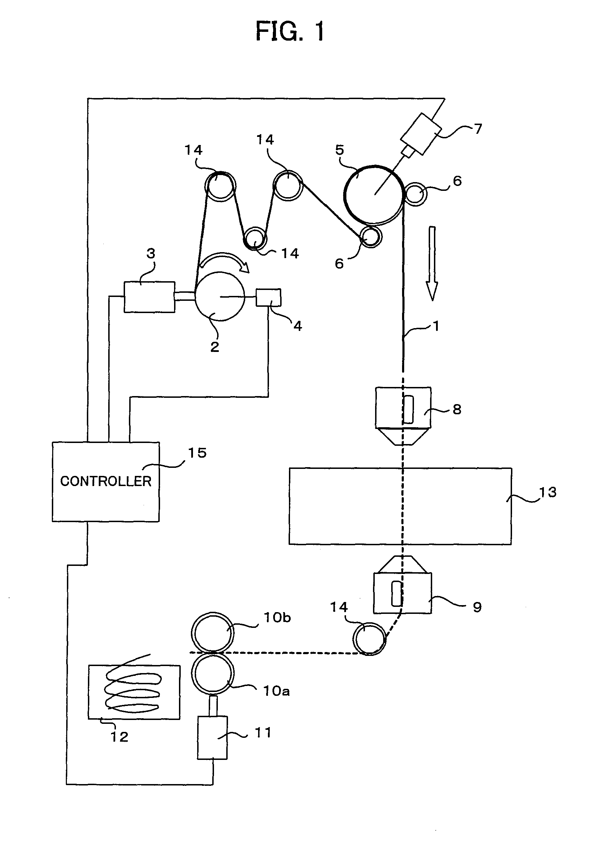

FIG. 1 is a schematic diagram illustrating an embodiment of the present invention. A wire bobbin 2 around which a wire electrode 1 is wound is driven by a torque motor 3 and is subjected to a predetermined torque directed in a reverse direction of a wire electrode feed direction. In addition, a velocity detector 4 is mounted on a rotary shaft of either the wire bobbin 2 or the torque motor 3 (in FIG. 1, an example is shown in which the velocity detector 4 is mounted on the wire bobbin 2). The wire electrode 1 fed out from the wire bobbin 2 is laid along a wire traveling path that passes through a plurality of guide rollers 14, is sandwiched between a brake roller 5 and a press roller 6, and further, passes through an upper guide 8, a work area in which a workpiece 13 is worked (initially a processing start aperture), a lower guide 9, and a guide roller 14, is sandwiched between wire take-up rollers 10a, 10b driven by a wire take-up motor 11, and finally is recovered at a wire recovery box 12. In the drawing, reference numeral 7 designates a brake motor of a brake apparatus that drives the brake roller 5. In addition, reference numeral 15 designates a controller that controls the wire-cut electric discharge machine. As in the related art, the controller 15 comprises a processor, a ROM, RAM or other such memory, control circuits of motors that drive the moving parts of the wire-cut electric discharge machine, an input/output interface, and so forth. To the controller 15 are connected the torque motor 3, the brake motor 7, and the wire take-up motor 11, all of which are controlled by the controller 15. Further, the velocity detector 4 is connected to the controller 15, such that a rotation velocity of the wire bobbin 2 detected by the velocity detector 4 is input to the controller 15.

FIG. 1 shows a state in which the wire electrode 1 is laid partway through the wire traveling path (up to just before the upper guide 8), and further, the wire traveling path along which the wire electrode is laid is indicated by the dotted line.

For example, when the wire electrode 1 is fed out in order to lay the wire electrode 1 up to the state shown in FIG. 1, and further, along the wire traveling path, if the velocity with which the wire electrode 1 is fed out is great, then the wire bobbin 2 continues to rotate due to the inertial force of the wire bobbin 2 and the wire electrode 1 is loosened by the wire bobbin 2 and departs from the wire traveling path, and further, the wire electrode 1 also departs from the plurality of guide rollers 14, 14 ... along which it had already been laid, thus causing it to depart from the wire traveling path. If the wire electrode 1 departs from the wire traveling path it is necessary to repeat the work of laying the wire electrode 1 along the wire traveling path all over again from the beginning, which takes time and is difficult.

Accordingly, in the present embodiment the velocity of the torque motor 3 or the wire bobbin 2 is detected with the velocity detector 4, and when the velocity with which the wire electrode 1 is fed out reaches a predetermined velocity, torque is raised for a predetermined period of time, preventing slackening of the wire electrode 1. Thereafter, once the rotation velocity of the wire bobbin 2 reaches a safe level, the torque of the torque motor 3 is lowered to a normal value to control the wire electrode 1 feed-out operation.

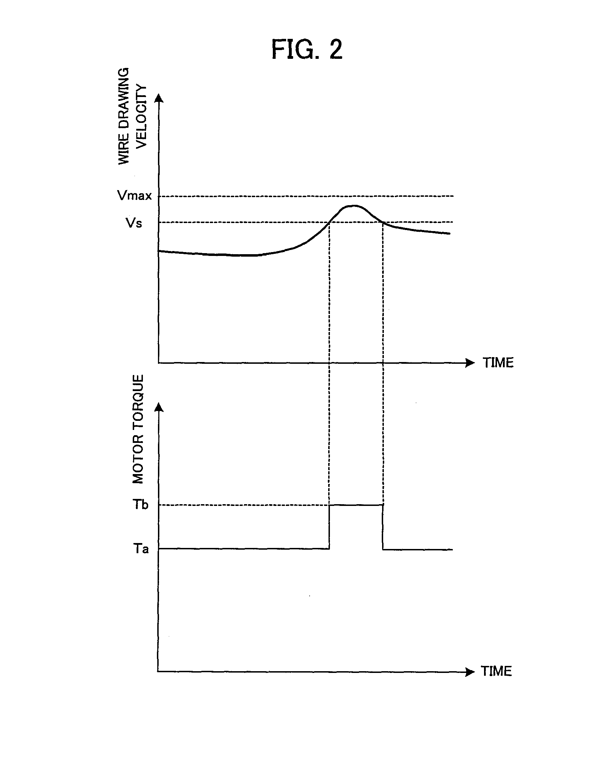

FIG. 2 shows an operation of preventing slack of a wire electrode 1 when a drawing velocity of the wire electrode 1 is great in drawing or feeding the wire electrode 1. In FIG. 2, the upper graph represents variation of the velocity detected by the velocity detector 4 with respect to time and the lower graph represents variation of an output torque of the torque motor 3 with respect to time. Vmax is a velocity at which the wire electrode 1 departs from the wire traveling path and Vs is a set velocity at or above which an output torque of the torque motor 3 is raised by a predetermined amount. Ta represents a commanded torque that the torque motor 3 normally outputs and Tb represents a commanded torque for increasing the torque.

As shown in FIG. 2, when the wire electrode 1 is drawn or fed at or below the predetermined velocity Vs, the controller 15 commands that the output torque of the torque motor 3 be the normal torque Ta and to be held at the torque Ta. However, if the feed velocity of the wire electrode 1 is fast and the velocity detected by the velocity detector 4 exceeds the preset predetermined velocity Vs, the controller 15 raises the command torque to the predetermined value Tb, which increases the output torque of the torque motor 3, thereby increasing a tensioning force on the wire electrode 1 in the reverse direction of the drawing direction of the wire electrode 1 and preventing slack from arising in the wire electrode 1, thus preventing the wire electrode 1 from jumping the wire traveling path along which the wire electrode 1 has been laid up to that point. Thereafter, after a predetermined sufficient period of time elapses after the velocity of the wire bobbin 2 (or the torque motor 3) falls to or below the predetermined velocity Vs, the controller commands the torque motor 3 to output the normal torque Ta.

Although the predetermined velocity Vs that increases the output torque of the torque motor 3 is a value lower than the velocity at which the wire electrode 1 departs from the wire traveling path, if the predetermined velocity Vs is set to too low a value the velocity with which the wire electrode 1 can be fed out becomes too slow. Accordingly, setting the predetermined velocity Vs at close to the velocity at which the wire electrode 1 departs from the wire traveling path generally enhances usability.

As a method of setting the predetermined velocity Vs, for example, the output torque of the torque motor 3 may be set to Ta, the wire electrode 1 fed out, a minimum velocity at which the wire electrode 1 is loosened from the wire bobbin 2 and departs from the wire traveling path obtained by signals from the velocity detector 4, and this minimum velocity set as the velocity Vmax at which the wire electrode 1 departs from the wire traveling path. Then, a torque increase command is output from the controller 15 to the torque motor 3, a lag time and the like until the actual torque motor 3 output torque increases taken into account, and a velocity slower than the velocity Vmax at which the wire electrode 1 departs from the wire traveling path set as a provisional predetermined velocity Vs'. Then, an experiment is carried out in which the wire electrode 1 is fed out at the usual velocity at which the wire is usually fed out, the output torque of the torque motor 3 switched from the normal torque Ta to the raised torque Tb when the provisional predetermined velocity Vs' is detected by the velocity detector 4, and it is confirmed whether or not the velocity detected by the velocity detector 4 exceeds the velocity Vmax at which the wire electrode 1 departs from the wire traveling path. In this experiment, if the velocity detected by the velocity detector 4 exceeds Vmax when the wire is fed out at the usual feed velocity (the wire electrode 1 departs from the wire bobbin 2), then the provisional predetermined velocity Vs' is lowered further. That provisional predetermined velocity Vs' detected by the velocity detector 4 at which the wire electrode 1 does not come lose from the wire bobbin 2 at the velocity at which the wire electrode 1 is fed out during normal operation and does not exceed the velocity Vmax at which the wire electrode 1 departs from the wire traveling path identified as described above, is then set as a reference predetermined velocity Vs that raises the output torque of the torque motor 3.

In addition, the wire electrode 1 may be prevented from departing from the wire bobbin 2 and departing from the wire traveling path by setting the predetermined velocity Vs at a velocity smaller than the velocity Vmax at which the wire electrode 1 departs from the wire traveling path by a predetermined amount and adjusting the torque Tb raised by the torque motor 3.

Moreover, the period of time for which the output torque of the torque motor 3 is maintained at the greater torque Tb is set to a period of time sufficient to allow the velocity of the wire bobbin 2 to decrease to the predetermined velocity Vs. Alternatively, however, instead of setting a fixed period of time for which the torque Tb is maintained, the torque Tb may be maintained until the velocity detected by the velocity detector 4 falls to or below the predetermined velocity Vs after the output torque of the torque motor 3 is raised to torque Tb. The return of the output torque of the torque motor 3 to the normal torque Ta may be accomplished after the wire electrode 1 feed velocity falls to or below the predetermined velocity Vs. Therefore, for example, the torque Tb may be maintained until the velocity detected by the velocity detector 4 falls to "0".

## Claims

1. A wire electrode supply device for supplying a wire electrode to a wire traveling path of a wire-cut electric discharge machine, comprising:
a wire bobbin storing the wire electrode;
a torque motor for applying a torque to said wire bobbin in a direction reverse to a traveling direction of the wire electrode;
a velocity detector for detecting a rotational velocity of said torque motor or said wire bobbin; and
a controller that controls said torque motor to raise the torque applied to said wire bobbin from a first value to a second value greater than the first value when the rotational velocity detected by said velocity detector exceeds a predetermined value.

2. A wire electrode supply device according to claim 1, wherein said controller controls said torque motor to lower the torque to the first value when a predetermined period of time elapses or when the rotation velocity detected by said velocity detector is reduced to be not greater than the predetermined value after controlling the torque motor to raise the torque to the second value.
